# EUROPÄISCHE PATENTANMELDUNG

(11) **EP 2 218 877 A1**
(43) Veröffentlichungstag der Anmeldung: **18.08.2010**
(21) Anmeldenummer: 09152668.1
(22) Anmeldetag: 12.02.2009
(51) Int. Cl.: F01D 11/00, F16J 15/44, F04D 29/12

(54) **Dichtungsvorrichtung eines Abgasturboladers**

(71) Anmelder: ABB Turbo Systems AG, 5400 Baden (CH)
(72) Erfinder: Schlienger, Joel, 8008 Zürich (CH); Aberle, Patrick, 5417 Untersiggenthal (CH)
(74) Vertreter: ABB Patent Attorneys

(57) **Zusammenfassung**

Die Kolbenringdichtstellen (Dg, Dk) einer Dichtungsvorrichtung zwischen dem Rotor und dem Gehäuse einer Strömungsmaschine weisen jeweils einen Kolbenring (5, 6), eine nach radial innen gerichtete, zylindrische Kontaktfläche (35, 36) am Gehäuse (31) sowie einen Axialanschlag (41, 42) am Rotor (R) auf. Dabei weist der Kolbenring (5) der äusseren Kolbenringdichtstelle (Dg) einen grösseren Aussenradius und einen kleineren Innenradius als der Kolbenring (6) der inneren Kolbenringdichtstelle auf. Gleichzeitig weist die äussere Kolbenringdichtstelle (Dg) einen kleineren Innenradius als die innere Kolbenringdichtstelle (Dk) auf.

Dank dem V-förmigen Anordnungskonzept kann auf einen auf den Rotor aufgeschrumpften Stahlring zwischen den Kolbenringdichtstellen verzichtet werden.

## Beschreibung

### Technisches Gebiet

Die Erfindung bezieht sich auf das Gebiet der Strömungsmaschinen, insbesondere der Abgasturbolader für aufgeladene Brennkraftmaschinen.

Sie betrifft eine Dichtungsvorrichtung zwischen dem Rotor und dem Gehäuse einer Strömungsmaschine sowie eine Strömungsmaschine und einen Abgasturbolader mit einer solchen Dichtungsvorrichtung.

### Stand der Technik

Für die Leistungssteigerung einer Brennkraftmaschine (Verbrennungsmotor) werden heutzutage standardmässig Abgasturbolader eingesetzt. Der Abgasturbolader umfasst eine Abgasturbine im Abgastrakt der Brennkraftmaschine und einen Verdichter, welcher der Brennkammer der Brennkraftmaschine Luft für den Verbrennungsvorgang zuführt. Mit der Aufladung der Brennkraftmaschine wird die Luft- und Kraftstoffmenge in den Zylindern erhöht und daraus ein merklicher Leistungsanstieg für die Brennkraftmaschine gewonnen. Der dafür verwendete Abgasturbolader setzt sich aus einem Rotor, umfassend eine Welle, ein Verdichterrad, ein Turbinenrad und allenfalls weitere auf der Welle angeordnete Bauteile, sowie der Wellenlagerung, den strömungsführenden Gehäuseteilen (Verdichtergehäuse, Turbinengehäuse) und dem Lagergehäuse zusammen.
Aufgrund der hohen, vom aktuellen Betriebspunkt des Abgasturboladers abhängigen Prozessdrücke im turbinen- wie auch verdichterseitigen Strömungsbereich eines Abgasturboladers, ist der Innenraum des Lagergehäuses vom Strömungskanal mittels einer Wellenabdichtung abzudichten, um die Gasleckage in den Innenraum zu minimieren. Der Druck im Innenraum entspricht üblicherweise dem atmosphärischen Druck.

In der DE2025125 ist eine Dichtungsvorrichtung für Abgasturbolader offenbart, bei welcher ein oder zwei Dichtelemente auf der Verdichterseite sowie mindestens ein Dichtelement auf der Turbinenseite angeordnet sind. Bei den Dichtelementen handelt es sich um geteilte Kolbenringe, welche über die Turboladerwelle aufgezogen und in Nuten in der Turboladerwelle eingelegt werden. Die Kolbenringe sind ausreichend radial vorgespannt, so dass diese im eingebauten Zustand an der stehenden Gehäusewand gemäss der Offenlegungsschrift radial aufliegen und durch die dabei auftretenden Reibkräfte axial im Gehäuse positioniert bleiben.

Die EP1130220 und die EP1507106 offenbaren Dichtungsvorrichtungen für Abgasturbolader, bei welchen zusätzlich am feststehenden Gehäuse eine axiale Anschlagschulter vorgesehen ist, an welcher der Kolbenring bei aufgebrachter Druckdifferenz formschlüssig ansteht und dadurch eine vorgegebene axiale Position beibehält. Dabei schleift sich der Kolbenring an der rotierenden Einschleiffläche ein und dichtet dadurch den Strömungskanal vom Innenraum des Lagergehäuses ab. Die rotierende Kolbenringnut ist dabei geringfügig breiter als der stehende Kolbenring ausgeführt. Die Druckdifferenz sorgt dafür, dass der Kolbenring solange in Richtung der Einschleiffläche verschoben wird und dabei abschleift, bis dieser an der axialen Anschlagschulter der Gehäusebohrung ansteht. Durch das Einschleifen der Kolbenringe wird eine erhöhte Dichtwirkung erreicht, da dadurch der axiale Dichtspalt zwischen dem Kolbenring und der Einschleiffläche des Gegenstücks auf ein Minimum reduziert werden kann. Dichtungen ohne eingeschliffene Kolbenringe haben generell höhere Leckageraten.

Aus tribologischen Gründen ist zu vermeiden, dass die Einschleifflächen des rotierenden Gegenstücks eines in Grauguss (GG25) ausgeführten Kolbenrings nicht aus Aluminium bestehen. Daher sind bei herkömmlichen Dichtungsvorrichtungen für Abgasturbolader mit eingeschliffenen Kolbenringen die Einschleifflächen am rotierenden Element immer aus Stahl ausgeführt.

In der Dichtungsvorrichtung für Abgasturbolader gemäss der US5176497 wird der Kolbenring durch ein geschraubtes Verdichterrad aus Aluminium sowie einer auf der Turboladerwelle mitrotierenden Dichtscheibe aus Stahl axial gesichert. Dabei schleift sich der weiche Kolbenring aufgrund der Druckdifferenz zwischen dem Strömungskanal und dem Innenraum des Lagergehäuses an der axialen Einschleiffläche der Dichtscheibe ein und erzeugt dadurch die gewünschte Dichtwirkung. Das Verdichterrad ist über die Dichtscheibe mittels Schraubverbindung mit der Turboladerwelle verspannt. Wie in der US4986733 offenbart, lässt sich der Kolbenring auch in einer umlaufenden Nut der Dichtscheibe montieren, so dass der Kolbenring keinen direkten Kontakt mit dem Verdichterrad aufweist.

Aufbauend auf diesem Konzept werden bei der Dichtungsvorrichtung für Abgasturbolader nach DE3737932 zwei Kolbenringe als Dichtelemente für die turbinenseitige Abdichtung eingesetzt.

Bei Dichtungsvorrichtungen mit zwei Kolbenringen sind aus Montagegründen die Kolbenringe in der Regel mit unterschiedlichen Aussenringdurchmessern ausgeführt. Dabei ist der Aussendurchmesser des inneren Kolbenrings kleiner als der Aussendurchmesser des äusseren Kolbenrings. Mit derartig ausgebildeten Kolbenringen lässt sich die Turboladerwelle mit den montierten Kolbenringen axial in die sich verjüngende Gehäuseöffnung einführen. Ist der inneren Kolbenring mit einem grösseren Aussendurchmesser als der äussere Kolbenring versehen, ist eine Demontage des inneren Kolbenrings in der Regel nicht mehr ohne Zerstörung des Kolbenringes möglich. Um dem äusseren Kolbenring in axialer Richtung eine harte Einschleiffläche zu bieten, ist bei herkömmlichen Dichtungsvorrichtungen ein zusätzlicher Ring aus einem harten und abriebfesten Material (z.B. Stahl) notwendig, welcher zwischen dem inneren und dem äusseren Kolbenring auf dem Verdichterrad aufgeschrumpft wird. Das Schrumpfmass erfordert sehr genaue Fertigungstoleranzen. Das Aufschrumpfen des Stahlrings kann das Tragbild des Gewindes wie auch die Belastungen in der Schraubverbindung zwischen dem Verdichterrad und der Welle wesentlich beeinflussen.

### Kurze Darstellung der Erfindung

Die Aufgabe der Erfindung besteht darin, eine Dichtungsvorrichtung zwischen dem Rotor und dem Gehäuse einer Strömungsmaschine, beispielsweise die verdichterseitige Wellenabdichtung eines Abgasturboladers, mit zwei oder mehr Kolbenringen und rotierenden Einschleifflächen zu schaffen, welche einfach montiert und demontiert werden kann und welche ohne zusätzliche, eigens für die Dichtung eingesetzte Bauteile am Rotor und/ oder am Gehäuse auskommt.

Die erfindungsgemässe Dichtungsvorrichtung zwischen dem Rotor und dem Gehäuse einer Strömungsmaschine umfasst zwei mit axialem Abstand voneinander angeordnete Kolbenringdichtstellen, wobei die Kolbenringdichtstellen jeweils einen Kolbenring, eine nach radial innen gerichtete, zylindrische Kontaktfläche am Gehäuse sowie einen Axialanschlag am Rotor. Dabei weist der Kolbenring der einen, dem Laufrad zugewandten, äusseren Kolbenringdichtstelle einen Aussenradius auf, welcher grösser ist als der Aussenradius des Kolbenringes der anderen, inneren Kolbenringdichtstelle. Gleichzeitig weist der Kolbenring der äusseren Kolbenringdichtstelle einen Innenradius auf, welcher kleiner ist als der Innenradius des Kolbenringes der inneren Kolbenringdichtstelle. Der Rotor umfasst eine Welle und mindestens ein Laufrad sowie allenfalls weitere, auf der Welle angeordnete Bauteile, wie etwa eine Dicht- oder eine Distanzscheibe.

Dank dem erfindungsgemässen, V-förmigen Anordnungskonzept kann auf einen auf den Rotor aufgeschrumpften Stahlring zwischen den Kolbenringdichtstellen verzichtet werden. Zudem ermöglicht diese Anordnung eine zerstörungsfreie Demontage sowie einfache Montage der Kolbenringe.

Optional können die Kolbenringe axial an Anschlagschultern des Gehäuses anstehen. Vorteilhafterweise sind die Einschleifflächen der Einschleifflächen am Rotor in funktionsgerechter Materialpaarung zum Kolbenringmaterial ausgeführt. Sind die Einschleifflächen aus einem harten und abriebfesten Material, beispielsweise Stahl, gefertigt, kann das Einschleifverhalten der Kolbenringe sowie deren Dichtwirkung verbessert werden.

Weitere Vorteile ergeben sich aus den abhängigen Ansprüchen.

### Kurze Beschreibung der Zeichnungen

Anschliessend ist anhand der Zeichnungen eine Ausführungsform einer erfindungsgemässen Dichtungsvorrichtung beschrieben. Hierbei zeigt
- Fig. 1: ein Schnittbild eines Abgasturboladers gemäss dem Stand der Technik mit einem feststehenden Gehäuse und einem Rotor, wobei die verdichterseitige Dichtungsvorrichtung im Detail vergrössert dargestellt ist, und

- Fig. 2: ein Schnittbild einer erfindungsgemäss ausgeführten verdichterseitigen Dichtungsvorrichtung zwischen dem Rotor und dem Gehäuse des Abgasturboladers nach Fig. 1.

### Weg zur Ausführung der Erfindung

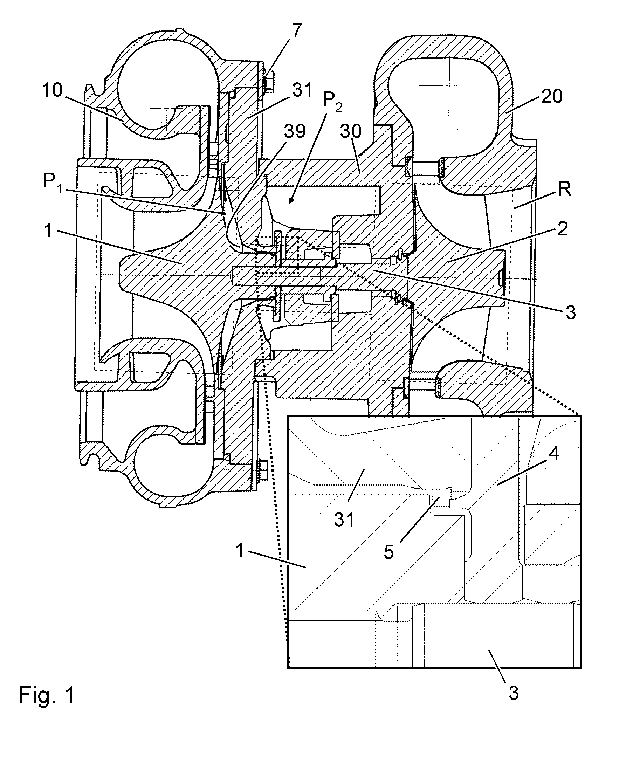

Fig. 1 zeigt als, Beispiel einer Strömungsmaschine, einen Abgasturbolader gemäss dem Stand der Technik, mit einem Radialverdichter und einer Radialturbine. Das Turbinenrad 2 der Turbine ist auf der Welle 3 befestigt oder einteilig mit der Welle ausgeführt. Das Turbinengehäuse 20 umschliesst das Turbinenrad 2 und begrenzt die Strömungskanäle, in denen das heisse Abgas von der Brennkraftmaschine über das Turbinenrad zu den Auspuffanlagen geführt wird. Das Verdichterrad 1 ist ebenfalls auf der Welle 3 befestigt. Das Lagergehäuse setzt sich in der Regel aus mehreren Gehäuseteilen zusammen, im dargestellten Fall umfasst es ein das Lager enthaltenes Gehäuseteil 30 sowie einen den vom Lagergehäuse umschlossenen Hohlraum zum Verdichter hin abschliessenden Gehäusedeckel 31. In den Gehäusedeckel 31 des Lagergehäuses ist eine zentrale Wellendurchführungsbohrung 39 eingelassen, in welcher die Welle 3 geführt ist. Im Bereich dieser Wellendurchführungsbohrung 39 ist die verdichterseitige Dichtungsvorrichtung zwischen dem rotierenden Teileverbund (Rotor R) und dem Lagergehäuse angeordnet. Im dargestellten Beispiel umfasst die verdichterseitige Dichtungsvorrichtung nach dem Stand der Technik einen einzelnen Kolbenring 5, welcher zwischen dem Teileverbund - Welle 3, Dichtscheibe 4 und Verdichterrad 1 - und den stehenden Gehäuseteilen 31 abdichtet. Die verdichterseitige Dichtungsvorrichtung dichtet den unter erhöhtem Druck P₁ stehenden Bereich im Rücken des Verdichterrades vom unter normalem Druck P₂ stehenden Hohlraum im Innern des Lagergehäuses 30 ab.

Bei der Montage des Verdichters wird zuerst die Dichtscheibe 4 von der Verdichterseite her auf die im Lagergehäuse eingesetzte Welle 3 aufgeschoben. Dann wird der Gehäusedeckel 31 mitsamt dem in der Wellendurchführungsbohrung 39 eingesetzten Kolbenring 5 auf das Lagergehäuse 30 aufgesetzt. Anschliessend wird das Verdichterrad 1 auf das Ende der Welle aufgesetzt und mit der Welle verbunden. Dabei wird die Dichtscheibe 4 zwischen dem Verdichterrad 1 und einem Axialanschlag an der Welle festgeklemmt. Zwischen dem Verdichterrad und der Dichtscheibe verbleibt eine Ringnut, in welcher der Kolbenring 5 angeordnet ist. Abschliessend wird das Verdichtergehäuse 10 auf das Lagergehäuse aufgesetzt und mittels der äusseren Befestigung 7 festgeschraubt.

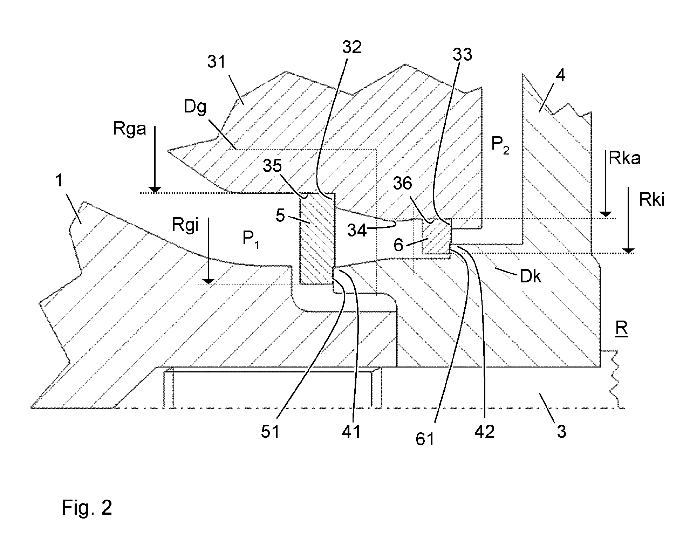

Fig. 2 zeigt den in der vorangehenden Figur vergrössert dargestellten Ausschnitt eines Abgasturboladers mit einer erfindungsgemässen Dichtungsvorrichtung.

Die Dichtungsvorrichtung umfasst erfindungsgemäss zwei, oder allgemein mehrere, axial hintereinander angeordnete, radial unterschiedlich dimensionierte Kolbenringdichtungen Dg und Dk. Eine Kolbenringdichtung umfasst jeweils eine zylindrische Kontaktfläche 35, 36 am feststehenden Gehäuse 31, je ein Axialvorsprung 41, 42 am Rotor mit einer axialen Anschlagfläche, sowie je einen Kolbenring 5, 6. Die Kolbenringe 5, 6 sind mit radialer Vorspannung beaufschlagt in die zylindrische Kontaktflächen eingepasst liegen mit einer axialen Stirnseite an dem Axialvorsprung 41, 42 an. Im Bereich der Anschlagfläche an den Axialvorsprüngen 41, 42 kommt es im Betrieb zu einer Einschleifung an den Kolbenringen, wodurch sich die Einschleifflächen 51, 61 bilden. Optional sind am Gehäuse 31 Axialanschläge 32, 33 ausgebildet, welche die axiale Verschiebbarkeit der Kolbenringe, und somit die axiale Einschleiftiefe begrenzen.

Wie erwähnt sind die Kolbenringdichtungen Dg, Dk erfindungsgemäss in radialer Richtung unterschiedlich dimensioniert. Ausgehend von der äussersten Kolbenringdichtung Dg, derjenigen also, welche dem Verdichterradrückraum am nächsten liegt, bilden die zylindrischen Kontaktflächen 35, 36 am Gehäuse und die Axialvorsprünge 41, 42 am Rotor der Kolbenringdichtungen Dg, Dk eine V-förmige Verengung. Der Innenradius der zylindrischen Kontaktfläche 35 der äusseren Kolbenringdichtstelle Dg ist grösser als der Innenradius der zylindrischen Kontaktfläche 36 der inneren Kolbenringdichtstelle Dk, und die maximale radiale Ausdehnung des Axialanschlags 41 der äusseren Kolbenringdichtstelle Dg ist kleiner als die maximale radiale Ausdehnung des Axialanschlags 42 der inneren Kolbenringdichtstelle Dk.

Die Kolbenringe sind entsprechend dieser V-förmigen Verengung derart dimensioniert, dass jeweils der Kolbenring 5 der dem Laufrad zugewandten, äusseren Kolbenringdichtstelle Dg einen Aussenradius Rga aufweist, welcher grösser ist als der Aussenradius Rka des Kolbenringes 6 der inneren Kolbenringdichtstelle Dk und dass der Kolbenring 5 der äusseren Kolbenringdichtstelle Dg einen Innenradius Rgi aufweist, welcher kleiner ist als der Innenradius Rki des Kolbenringes 6 der inneren Kolbenringdichtstelle Dk.

Sind mehr als zwei axial hintereinander angeordnete Kolbenringdichtungen vorgesehen, sind jeweils in der vom Laufrad abgewandten Richtung von einer Kolbenringdichtstelle zur nächsten Kolbenringdichtstelle, die Kolbenringe abgestuft mit abnehmendem Aussenradius und zunehmendem Innenradius ausgebildet, die zylindrischen Kontaktflächen abgestuft mit abnehmendem Innenradius ausgebildet, und die Axialanschläge abgestuft mit zunehmender maximaler radialer Ausdehnung ausgebildet.

Der Kolbenring 5 der äussersten Kolbenringdichtung Dg wird durch die Klemmverbindung zwischen dem Verdichterrad 1 und der Dichtscheibe 4 axial arretiert. Der Kolbenring 6 der inneren Kolbenringdichtung Dg ist für den möglichen Fall eines Unterdrucks im Strömungskanal - wenn also der Druck P₁ im Rücken des Verdichterrades tiefer ist als der Druck P₂ im Hohlraum im Innern des Lagergehäuses - ebenfalls axial zu sichern. Dazu wird im Lagergehäuse 31 ein geringer radialer Rücksprung 34 vorgesehen, der dem Kolbenring 6 als axiale Anschlagkante dient und eine Verschiebung des Kolbenrings 6 in Richtung der äusseren Kolbenringdichtung unterbindet. Der Innenradius des Rücksprungs 34 ist geringfügig kleiner als der Innenradius der zylindrischen Kontaktfläche 36.

Die Kolbenringe 5, 6 werden bei der Ladermontage vorgängig in der Wellendurchführungsbohrung 39 im Gehäusedeckel 31 montiert, bevor der Gehäusedeckel 31 mitsamt den eingesetzten Kolbenringen 5, 6 auf das Lagergehäuse 30 aufgesetzt und festgeschraubt wird.

### Bezugszeichenliste

- 1: Verdichterrad
- 10: Verdichtergehäuse
- 2: Turbinenrad
- 20: Turbinengehäuse
- 3: Welle des Abgasturboladers
- 30, 31: Lagergehäuse
- 32, 33: Axialanschlag (Stator)
- 34: Radialrücksprung (Stator)
- 35, 36: zylindrische Kontaktfläche
- 39: Wellendurchführungsbohrung
- 4: Dichtscheibe, (mit Welle mitrotierendes Bauteil)
- 41, 42: Axialvorsprung mit Kontaktfläche (Rotor)
- 5, 6: Kolbenring
- 51, 61: Einschleiffläche am Kolbenring
- 7: Gehäuseverbindung
- Dg, Dk: Kolbenringdichtstellen
- Rga, Rka: Aussenradius der Kolbenringe
- Rgi, Rki: Innenradius der Kolbenringe
- R: Rotor (umfassend 1, 2, 3, 4)
- P₁: Druck im Rücken des Verdichterrades
- P₂: Druck im Innern des Lagergehäuses

## Patentansprüche

1. Dichtungsvorrichtung zwischen dem eine Welle (3) und mindestens ein Laufrad (1) umfassenden Rotor (R) und dem Gehäuse (31) einer Strömungsmaschine, wobei die Welle (3) in einer Wellendurchführungsbohrung (39) im Gehäuse (31) angeordnet ist, umfassend zwei mit axialem Abstand voneinander angeordnete Kolbenringdichtstellen (Dg, Dk), wobei die Kolbenringdichtstellen (Dg, Dk) jeweils einen Kolbenring (5, 6), eine zylindrische Kontaktfläche (35, 36) am Gehäuse (31) sowie einen Axialanschlag (41, 42) am Rotor (R) umfassen,
**dadurch gekennzeichnet, dass**
der Kolbenring (5) der einen, dem Laufrad zugewandten, äusseren Kolbenringdichtstelle (Dg) einen Aussenradius (Rga) aufweist, welcher grösser ist als der Aussenradius (Rka) des Kolbenringes (6) der anderen, inneren Kolbenringdichtstelle (Dk), und dass
der Kolbenring (5) der äusseren Kolbenringdichtstelle (Dg) einen Innenradius (Rgi) aufweist, welcher kleiner ist als der Innenradius (Rki) des Kolbenringes (6) der inneren Kolbenringdichtstelle (Dk).

2. Dichtungsvorrichtung nach Anspruch 1, wobei
der Innenradius der zylindrischen Kontaktfläche (35) der äusseren Kolbenringdichtstelle (Dg) grösser ist als der Innenradius der zylindrischen Kontaktfläche (36) der inneren Kolbenringdichtstelle (Dk), und wobei
die maximale radiale Ausdehnung des Axialanschlags (41) der äusseren Kolbenringdichtstelle (Dg) kleiner ist, als die maximale radiale Ausdehnung des Axialanschlags (42) der inneren Kolbenringdichtstelle (Dk).

3. Dichtungsvorrichtung nach einem der Ansprüche 1 oder 2, wobei
zwischen der zylindrischen Kontaktfläche (35) der äusseren Kolbenringdichtstelle (Dg) und der zylindrischen Kontaktfläche (36) der inneren Kolbenringdichtstelle (Dk) am Gehäuse (31) eine radiale Rücksprungkante (34) angeordnet ist, welche eine kleinste radiale Ausdehnung aufweist, die kleiner ist als der Innenradius der zylindrischen Kontaktfläche (36) der inneren Kolbenringdichtstelle (Dk).

4. Dichtungsvorrichtung nach einem der Ansprüche 1 bis 3, wobei
das Gehäuse auf der dem Laufrad abgewandten Seite der zylindrischen Kontaktflächen (35, 36) jeweils eine radiale Abstufung mit kleinerem Durchmesser aufweist, welche für die Kolbenringe (5, 6) jeweils einen Axialanschlag (32, 33) bilden.

5. Dichtungsvorrichtung nach einem der Ansprüche 1 oder 2, wobei
mehrere Kolbenringdichtstellen (Dg, Dk) vorgesehen sind, wobei in der vom Laufrad abgewandten Richtung von einer Kolbenringdichtstelle (Dg) zur nächsten Kolbenringdichtstelle (Dk),
die Kolbenringe (5, 6) jeweils abgestuft mit abnehmendem Aussenradius (Rga, Rka) und zunehmendem Innenradius (Rgi, Rki) ausgebildet sind,
die zylindrischen Kontaktflächen (35, 36) jeweils abgestuft mit abnehmendem Innenradius ausgebildet sind, und
die Axialanschläge (41, 42) jeweils abgestuft mit zunehmender maximaler radialer Ausdehnung ausgebildet sind.

6. Dichtungsvorrichtung nach Anspruch 5, wobei
zwischen den zylindrischen Kontaktflächen (35, 36) zweier benachbarten Kolbenringdichtstellen (Dg, Dk) am Gehäuse (31) eine radiale Rücksprungkante (34) angeordnet ist, welche eine kleinste radiale Ausdehnung aufweist, die kleiner ist als der Innenradius der zylindrischen Kontaktfläche (36) derjenigen der beiden benachbarten Kolbenringdichtstellen (Dk), welche auf der dem Laufrad abgewandten Seite angeordnet ist.

7. Dichtungsvorrichtung nach einem der Ansprüche 5 bis 6, wobei
das Gehäuse auf der dem Laufrad abgewandten Seite der zylindrischen Kontaktflächen (35, 36) jeweils eine radiale Abstufung mit kleinerem Durchmesser aufweist, welche für die Kolbenringe (5, 6) jeweils einen Axialanschlag (32, 33) bilden.

8. Strömungsmaschine, umfassend eine Dichtungsvorrichtung zwischen dem eine Welle (3) und ein Laufrad (1) umfassenden Rotor (R) und dem Gehäuse (31) der Strömungsmaschine, wobei die Dichtungsvorrichtung nach einem der Ansprüche 1 bis 7 ausgebildet ist.

9. Abgasturbolader, umfassend eine Dichtungsvorrichtung zwischen dem eine Welle (3) und ein Verdichterrad (1) umfassenden Rotor (R) und dem Gehäuse (31) des Abgasturboladers, wobei die Dichtungsvorrichtung nach einem der Ansprüche 1 bis 7 ausgebildet ist.
